# EUROPEAN PATENT APPLICATION

(11) **EP 4 796 576 A1**
(43) Date of publication of application: **26.08.2026**
(21) Application number: 25798238.9
(22) Date of filing: 02.05.2025
(51) Int. Cl.: C08J 3/24, C08J 3/12, C08F 220/06, C08F 2/24, C08J 9/16, C08J 9/08, C08K 9/10

(54) **SUPER ABSORBENT POLYMER, PREPARATION METHOD THEREOF, AND ABSORBENT ARTICLE COMPRISING THE SAME**

(30) Priority: 03.05.2024 KR 20240058944; 30.04.2025 KR 20250057387
(71) Applicant: LG Chem, Ltd., Seoul 07336 (KR)
(72) Inventor: KIM, Jae Soon, Daejeon 34122 (KR); CHO, Hyemin, Daejeon 34122 (KR)
(74) Representative: Goddar, Heinz J.
(86) International application number: PCT/KR2025/005967
(87) International publication number: WO 2025/230348

(57) **Abstract**

The present invention relates to a superabsorbent polymer, a preparation method thereof, and an absorbent article comprising the same. More specifically, it is a technology that implements excellent absorption durability when applied to an actual product by simultaneously satisfying appropriate surface tension and excellent absorption properties.

## Description

### [Technical Field]

### Cross-reference to related application(s)

This application claims the benefit of priority based on Korean Patent Application No. 10-2024-0058944 filed on May 3, 2024, and Korean Patent Application No. 10-2025-0057387 filed on April 30, 2025, and all the contents disclosed in the documents of the corresponding Korean patent applications are comprised as a part of the present specification.

The present invention relates to a superabsorbent polymer, a preparation method thereof, and an absorbent article comprising the same. More specifically, it is a technology that implements excellent absorption durability when applied to an actual product by simultaneously satisfying appropriate surface tension and excellent absorption properties.

### [Background Art]

A superabsorbent polymer (Super Absorbent Polymer, SAP) is a synthetic polymer material having a function of absorbing moisture of about 500 to 1,000 times its own weight, and is named by different names such as SAM (Super Absorbency Material), AGM (Absorbent Gel Material), etc., depending on the developer. Such a superabsorbent polymer began to be put into practical use as sanitary products, and currently, it is widely used as materials such as soil water-retaining agents for gardening, water-stopping materials for civil engineering and construction, sheets for raising seedlings, freshness preservatives in the food distribution field, and for poultices.

Such a superabsorbent polymer is mainly widely used in the field of hygiene products such as diapers or sanitary napkins. Within the hygiene product, the superabsorbent polymer is generally included in a state of being spread in pulp. However, recently, efforts to provide a hygiene product such as a diaper with a thinner thickness are continuing, and as a part thereof, development of so-called pulpless diapers in which the content of pulp is reduced or, further, pulp is not used at all is being actively progressed.

As such, in the case of a hygiene product in which the content of pulp is reduced or pulp is not used, the superabsorbent polymer is included in a relatively high ratio, so that the superabsorbent polymer particles are inevitably included in multiple layers within the hygiene product. In order for the entire multi-layered superabsorbent polymer particles to more efficiently absorb a large amount of liquid such as urine, the superabsorbent polymer basically needs to exhibit not only high absorption performance but also a fast absorption rate.

In the case of such a pulpless hygiene article, under actual product use conditions, the swollen superabsorbent polymer may detach from the hygiene material inside the article. In this case, the superabsorbent polymer tends to shift to one side of the hygiene article, failing to absorb bodily fluids and causing leakage; or, if it cannot absorb the bodily fluid quickly enough, the fluid previously absorbed by the superabsorbent polymer may be squeezed out again (Rewet). These problems readily occur together and can lead to skin rashes in the user.

Accordingly, there is a demand for the development of technology to improve problems such as leakage or rewetting (Rewet) by providing excellent absorption durability as the superabsorbent polymer is not detached from the product when products such as hygiene products are actually used, and a fast absorption time (Absorbent time) of body fluid of the hygiene product.

### [Content of the Invention]

### [Technical Problem]

Accordingly, the present invention provides a superabsorbent polymer, a method for preparing the same, and an absorbent article comprising the same, which can achieve excellent absorption durability under actual use conditions by simultaneously satisfying appropriate surface tension and excellent absorption properties.

### [Technical Solution]

In order to solve the above task, the present invention provides a polyacrylate-based superabsorbent polymer satisfying the following i) to iv):
i) surface tension measured according to a Wilhelmy plate method at a room temperature of 24±2°C is 63 to 72 mN/m,
ii) vortex absorption rate is 30 seconds or less,
iii) centrifuge retention capacity (CRC) measured in accordance with EDANA WSP 241.3 is 32 g/g or more,
iv) 0.9 psi absorbency under pressure (AUP) measured in accordance with EDANA WSP 242.3 is 12 g/g or more.

According to another embodiment of the present invention, provided is a preparation method of a superabsorbent polymer comprising the steps of:
forming a hydrogel polymer by polymerization a monomer mixture comprising an acrylic acid-based monomer having at least partially neutralized acidic groups, an internal crosslinking agent, a surfactant having an HLB of 1 to 10 and a weight-average molecular weight of 200 to 1,500 g/mol, and an encapsulated foaming agent; forming a base resin powder by drying, pulverizing, and classifying the hydrogel polymer; and preparing a polyacrylate-based superabsorbent polymer in which a surface crosslinking layer is formed on the surface of the base resin powder by heat-treating the base resin powder in the presence of a surface crosslinking agent.

According to another embodiment of the present invention, an absorbent article comprising the aforementioned superabsorbent polymer is provided, and specifically, a liquid-impermeable backsheet, an absorbent layer, and a liquid-permeable topsheet are sequentially laminated, wherein the absorbent layer comprises the aforementioned superabsorbent polymer.

### [Effects of the Invention]

The superabsorbent polymer of the present invention exhibits excellent absorption durability when applied to an actual product by simultaneously implementing excellent absorption properties along with appropriate surface tension.

According to the preparation method of the superabsorbent polymer of the present invention, by using a combination of a low molecular weight surfactant having a specific HLB value and an encapsulated foaming agent in the polymerization step, it is possible to prepare a resin that implements appropriate surface tension and excellent absorption properties, and at the same time, the absorption durability of the absorbent article to which the resin is applied is significantly improved.

### [Mode for Carrying Out the Invention]

The terms used in this specification are only used to describe exemplary embodiments and are not intended to limit the present invention.

Expressions in the singular comprise plural expressions unless the context clearly indicates otherwise. In this specification, terms such as "comprise", "equipped with", or "have" are intended to designate the existence of implemented features, steps, components, or combinations thereof, and it should be understood that they do not preclude the possibility of existence or addition of one or more other features or steps, components, or combinations thereof in advance.

Terms such as first, second, and third are used to describe various components, and the terms are used only for the purpose of distinguishing one component from other components.

The present invention can have various modifications and can have various forms, so specific embodiments will be exemplified and described in detail below. However, this is not intended to limit the present invention to a specific disclosed form, and it should be understood to comprise all modifications, equivalents, or substitutes included in the spirit and technical scope of the present invention.

The terms "resin" or "polymer" used in the present specification denote a water-soluble ethylenically unsaturated monomer in a polymerized state, and encompass all ranges of moisture content and particle size. Among these polymers, those in the state after polymerization but before drying, having a moisture content of about 40% by weight or more, may be referred to as a hydrogel polymer, and particles obtained by pulverizing and subsequently drying such hydrogel polymers may be referred to as crosslinked polymers.

In addition, the term "crosslinked polymer" means that which is crosslinked and polymerized in the presence of the water-soluble ethylenically unsaturated monomer and the internal crosslinking agent, and the "base resin" means a material comprising such a crosslinked polymer, and "base resin powder or base resin particles" means their particulate material.

In addition, the term "superabsorbent polymer" is used, depending on the context, to encompass:
a crosslinked polymer obtained by polymerization a water-soluble ethylenically unsaturated monomer containing acidic groups, at least a portion of which are neutralized;
a base resin derived by drying the crosslinked polymer; and
those crosslinked polymers or base resins that have been subjected to additional processes-such as surface crosslinking, fine-powder re-assembly, drying, pulverizing, and classification-to render them in a state suitable for commercialization.

In addition, the term "superabsorbent polymer powder" refers to a particulate material comprising a crosslinked polymer obtained by polymerization a water-soluble ethylenically unsaturated monomer comprising acidic groups, at least part of which are neutralized, and crosslinked by an internal crosslinking agent.

Recently, in response to demands for thinning hygiene products such as diapers or sanitary napkins, hygiene products with reduced pulp content or without pulp have been actively developed. In the case of such pulpless hygiene products, under actual product use conditions, the swollen superabsorbent polymer tends to detach from the hygiene product. In this case, the superabsorbent polymer shifts to one side of the hygiene product and cannot absorb body fluids, causing leakage, or if urine is not absorbed quickly, the urine that had been absorbed in the superabsorbent polymer may be squeezed out again (Rewet); both situations can easily lead to skin rashes in the user. Accordingly, there is a demand for technology development that, when hygiene products are actually used, prevents detachment of the superabsorbent polymer-thereby providing excellent absorption durability and achieves fast urine absorption time, in order to improve problems such as leakage and rewetting.

Accordingly, the present inventors have confirmed that when the superabsorbent polymer simultaneously satisfies appropriate surface tension and excellent absorption properties (i) to iv) described below), it can exhibit excellent absorption durability under absorption conditions without such problems when applied to an actual product.

Specifically, when the corresponding polymer is applied to an actual absorbent article, it was confirmed that the resin surface is hydrophobized to maximize interaction with adjacent adhesives in the article, so that the resin is not detached from the absorbent article under absorption conditions, thereby achieving excellent absorption durability, and the present invention was completed.

In addition, the present inventors have confirmed that, by using a combination of a low molecular weight surfactant having a specific HLB value and an encapsulated foaming agent in the polymerization step to prepare such a resin, absorption properties can be improved with a uniform foaming effect.

### Superabsorbent polymer

A superabsorbent polymer according to an embodiment of the present invention is a polyacrylate-based superabsorbent polymer and satisfies the following i) to iv).
i) surface tension measured according to a Wilhelmy plate method at a room temperature of 24±2°C is 63 to 72 mN/m, ii) vortex absorption rate is 30 seconds or less, iii) centrifuge retention capacity (CRC) measured according to EDANA WSP 241.3 is 32 g/g or more, iv) 0.9 psi absorbency under pressure (AUP) measured according to EDANA WSP 242.3 is 12 g/g or more.

The superabsorbent polymer simultaneously satisfies the physical properties of i) to iv), which are excellent absorption properties along with appropriate surface tension, so that it can exhibit excellent absorption durability under absorption conditions when applied to an actual product.

The superabsorbent polymer may have i) a surface tension according to the Wilhelmy plate method of 63 to 72 mN/m, and by satisfying the above range, when applied to a final absorbent article, the polymer is not detached from the absorbent article under absorption conditions, thereby implementing excellent absorption durability. If it is outside the above range, the absorption durability of the final product may be reduced.

The surface tension may preferably be 64 to 71 mN/m, or 64 to 70 mN/m. A specific measuring method of the surface tension will be described in more detail in the experimental examples to be described later.

The superabsorbent polymer may have ii) a vortex absorption rate of 30 seconds or less. If it is outside the above range, the absorption performance of the final product itself may be deteriorated, and the absorption durability under absorption conditions may also be reduced.

The absorption rate may preferably be 10 seconds to 29 seconds, 10 seconds to 28 seconds, 10 seconds to 27 seconds, or 10 seconds to 26 seconds. The measuring method of the absorption rate will be described in more detail in the experimental examples to be described later.

The superabsorbent polymer may have iii) a centrifuge retention capacity (CRC) measured according to EDANA WSP 241.3 of 32 g/g or more. If it is outside the above range, the absorption performance of the final product itself may be reduced, and the absorption durability under absorption conditions may also be reduced.

The centrifuge retention capacity may preferably be 32 g/g to 38 g/g, 32 g/g to 36 g/g, or 33 g/g to 35 g/g. Its specific measuring method will be described in more detail in the experimental examples to be described later.

The superabsorbent polymer may have iv) a 0.9 psi absorbency under pressure (AUP) measured according to EDANA WSP 242.3 of 12 g/g or more. If it is outside the above range, the absorption performance of the final product itself may be reduced, and the absorption durability under absorption conditions may also be reduced.

Preferably, it may be 13 g/g to 18 g/g, 14 g/g to 16 g/g, or 14 g/g to 16.5 g/g. Its specific measuring method will be described in more detail in the experimental examples to be described later.

According to an embodiment of the present invention, the superabsorbent polymer may have a particle diameter of 150 to 850 µm. More specifically, at least 95 wt% or more of the superabsorbent polymer may have a particle diameter of 150 to 850 µm, it may comprise 50% by weight or more of particles having a particle diameter of 300 to 600 µm, and fine powder having a particle diameter of less than 150 µm may be less than 3% by weight.

According to an embodiment of the present invention, the polyacrylate-based superabsorbent polymer comprises a base resin including a hydrogel polymer obtained by polymerizing a monomer mixture comprising an acrylic acid-based monomer having at least partially neutralized acidic groups, an internal crosslinker, a surfactant having an HLB of 1 to 10 and a weight-average molecular weight of 200 to 1,500 g/mol, and an encapsulated foaming agent; and a surface crosslinked layer formed on a surface of the base resin.

In the preparation of the base resin, a low-molecular-weight surfactant having an HLB of 1 to 10 and a weight-average molecular weight of 200 to 1,500 g/mol is used in combination with an encapsulated foaming agent. As a result, an optimal micelle structure is formed in the neutralization solution, thereby maximizing the foaming effect and achieving excellent retention capacity and absorption rate. In particular, due to the hydrophobic nature of the surfactant, the surface tension of the final superabsorbent polymer is increased, thereby preventing detachment of the superabsorbent polymer from the product when applied thereto and further improving absorption durability. Preferably, the surfactant is a non-polymeric surfactant.

In the case of a surfactant having an HLB exceeding 10, the desired effect of improving absorption durability is insignificant. In addition, even if the HLB is 1 to 10, in the case of a polymeric surfactant having a molecular weight exceeding 1,500 g/mol, basic absorption properties of the superabsorbent polymer may be deteriorated depending on the type of main chain and the type of functional group, and when applied to an absorbent article, interaction with an adjacent layer may decrease or repulsive force may rather increase, so there is a problem that it is difficult to implement the desired absorption durability effect.

Preferably, the HLB of the surfactant may be 1.1 or more, 1.3 or more, 1.5 or more, 2.0 or more, or 3.0 or more, or it may be 9.8 or less, 9.7 or less, 9.5 or less, 9.0 or less, for example, 1.1 to 9.8, 1.3 to 9.7, 1.5 to 9.5, 2.0 to 9.0, 3.0 to 8.0, or 3.0 to 7.0.

Components having commonly known values can be used as the surfactant having the specific HLB (Hydrophile-Lipophile Balance) value. The HLB value can be typically calculated based on the structure of the molecule and the composition of functional groups, and can be calculated according to Griffin's method, Davies' method, or a method experimentally determined based on actual emulsification characteristics and solubility characteristics.

According to the Griffin method, it is calculated as HLB = (molecular weight of hydrophilic part / total molecular weight) × 20, which is easy to apply to non-ionic surfactants.

According to the Davies method, it is calculated by the following calculation formula, which is easy to apply to ionic and complex surfactants. $HLB = 7 + {\sum }_{i = 1}^{m} {H}_{i} - n \times 0.475$

Here, m is the number of hydrophilic groups in the molecule, H*i* is the coefficient of the *i*-th hydrophilic group, and n is the number of lipophilic groups in the molecule. The coefficient of the hydrophilic group follows commonly known values.

Preferably, the weight-average molecular weight of the surfactant may be 200 to 1,200 g/mol, 200 to 1,000 g/mol, 200 to 800 g/mol, or 200 to 700 g/mol, and it is preferable to implement the desired effect within the above range.

For the surfactant having the specific weight average molecular weight, components whose structural features are clear so that the weight-average molecular weight can be easily known can be used. However, if such structural features are not clear, in the case of a single structure compound, the molecular structure can be specified through NMR (Nuclear Magnetic Resonance) and GC/MS (Gas Chromatography/Mass Spectrometry) measurements, and the weight-average molecular weight can be measured by analysis of each constituent atom, and in the case of a polymer compound, it can be measured through a commonly known method of gel permeation chromatography (GPC).

The surfactant may be used without any particular limitation as long as it satisfies the aforementioned HLB and molecular weight range, for example, at least one selected from the group consisting of calcium stearate (Calcium Stearate, Mw 607, HLB 5.0), glyceryl monolaurate (Glyceryl Monolaurate, Mw 274.4, HLB 5.0), polyoxyethylene (10) lauryl ether (polyoxyethylene (10) lauryl ether Mw 626.86, HLB 9.7), sucrose dioleate (Sucrose dioleate Mw 871.2, HBL 7.1), propylene glycol monostearate (propylene glycol monostearate Mw 342.56 HLB 3.4), and ethylene glycol distearate (ethylene glycol distearate Mw 594.99 HLB 1.5) may be used.

The surfactant may be included in an amount of 100 to 10,000 ppmw relative to the total content of the acrylic acid-based monomer, and preferably, it may be 200 ppmw or more, 300 ppmw or more, or 400 ppmw or more, or it may be 8,000 ppmw or less, 5,000 ppmw or less, 3,000 ppmw or less, or 1,000 ppmw or less, and it may be 200 to 8,000 ppmw, 300 to 5,000 ppmw, or 400 to 3,000 ppmw, 400 to 1,000 ppmw. It is preferable that it is used within the above content range to implement the aforementioned absorption property improvement effect.

The encapsulated foaming agent is a component that forms fine pores in the polymer during the polymerization stage of the base resin, thereby increasing the surface area of the polymer. By using the encapsulated foaming agent in combination with the aforementioned low molecular weight surfactant having an HLB value of 1 to 10 and a weight-average molecular weight of 200 to 1,500 g/mol, the foaming effect is maximized through optimal micelle structure formation in the neutralization solution, thereby achieving excellent water retention capacity and absorption rate. Moreover, the combination with the aforementioned surfactant contributes to improving the absorption durability of the final product.

Meanwhile, when using the carbonate-based foaming agents commonly employed, it is difficult to control the foaming performance and, accordingly, it may be difficult to achieve the desired level of surface tension improvement and absorption properties. The encapsulated foaming agent of the present invention expands within the polymerization temperature range and subsequently contracts, thereby facilitating control of foaming performance and formation of desired pores. In addition, when used in combination with the low molecular weight surfactant having the specific HLB value, a synergistic effect can be achieved.

The encapsulated foaming agent may have a structure comprising a core containing a hydrocarbon and a shell surrounding the core and formed by a thermoplastic resin.

In the encapsulated foaming agent, the hydrocarbon may be one or more selected from the group consisting of n-propane, n-butane, iso-butane, cyclobutane, n-pentane, iso-pentane, cyclopentane, n-hexane, iso-hexane, cyclohexane, n-heptane, iso-heptane, cycloheptane, n-octane, iso-octane, and cyclooctane, and the thermoplastic resin may be a polymer formed from at least one monomer selected from the group consisting of (meth)acrylate, (meth)acrylonitrile, aromatic vinyl, vinyl acetate, vinyl halide, and vinylidene halide. As commercially available products, F36D from MATSUMOTO, MS140DS from Dongjin Semichem, etc. can be used.

The encapsulated foaming agent may be included in an amount of 10 to 10,000 ppmw relative to the total content of the acrylic acid-based monomer, and preferably, 500 ppmw or more, 1,000 ppmw or more, 1,500 ppmw or more, 1,800 ppmw or more, or 2,000 ppmw or more, or it may be 8,000 ppmw or less, 5,000 ppmw or less, or 3,000 ppmw or less, and it may be 500 to 8,000 ppmw, 1,000 to 8,000 ppmw, 1,500 to 5,000 ppmw, or 2,000 to 3,000 ppmw. It is preferable that it is used within the above content range to implement the aforementioned absorption property improvement effect.

Meanwhile, the surfactant and the encapsulated foaming agent may be used in a weight ratio of 1:1 to 1:50, preferably 1:1 to 1:40, 1:1 to 1:30, 1:1 to 1:20, or 1:1 to 1:10, and it is preferable because the aforementioned synergistic effect can be further improved by being used in combination in the above content range.

The term "internal crosslinking agent" used in this specification is a term used to distinguish it from the "surface crosslinking agent" for crosslinking the surface of the base resin, and it serves to polymerize the unsaturated bonds of the aforementioned acrylic acid-based monomers by crosslinking them. Crosslinking in this step proceeds without distinction between surface or internal, but by the surface crosslinking process of the base resin described later, the particle surface of the finally prepared superabsorbent polymer consists of a structure crosslinked by a surface crosslinking agent, and the inside consists of a structure crosslinked by the internal crosslinking agent.

As the internal crosslinking agent, a polyfunctional component can be used, for example, at least one selected from the group consisting of N,N'-methylenebisacrylamide, allyl (meth)acrylate, trimethylolpropane tri(meth)acrylate, ethylene glycol di(meth)acrylate, polyethylene glycol (meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, polyethylene glycol diglycidyl ether, propylene glycol, glycerin, and ethylene carbonate may be used. Preferably, ethylene glycol diglycidyl ether, polyethylene glycol diglycidyl ether, and allyl (meth)acrylate can be used.

The internal crosslinking agent may be used in an amount of 100 ppmw to 10,000 ppmw based on the weight of the water-soluble ethylenically unsaturated monomer. By being comprised in the above content range, strength of a certain level or more can be realized through sufficient crosslinking, and sufficient retention capacity can be realized by the introduction of an appropriate crosslinked structure. Preferably, it may be included in an amount of 200 ppmw or more, 500 ppmw or more, or 1,000 ppmw or more, and 8,000 ppmw or less, 5,000 ppmw or less, 3,000 ppmw or less, or 2,000 ppmw or less, and 200 ppmw to 5,000 ppmw, 300 ppmw to 3,000 ppmw, or 1,000 ppmw to 2,000 ppmw. If the content of the internal crosslinking agent is too low, crosslinking does not occur sufficiently, so it may be difficult to implement strength of a certain level or more, and dry efficiency is significantly lowered, and if the content of the internal crosslinking agent is too high, the internal crosslinking density increases, making it difficult to implement desired retention capacity.

Hereinafter, the contents of other components of the base resin and the surface crosslinking layer will be described in more detail in the preparation method of the superabsorbent polymer described later.

### Preparation method of superabsorbent polymer

A preparation method of a superabsorbent polymer according to an embodiment of the present invention comprises the steps of: forming a hydrogel polymer by polymerization a monomer mixture comprising an acrylic acid-based monomer having at least partially neutralized acidic groups, an internal crosslinking agent, a surfactant having an HLB of 1 to 10 and a weight-average molecular weight of 200 to 1,500 g/mol, and an encapsulated foaming agent; forming a base resin powder by drying, pulverizing, and classifying the hydrogel polymer; and preparing a polyacrylate-based superabsorbent polymer in which a surface crosslinking layer is formed on the surface of the base resin powder by heat-treating the base resin powder in the presence of a surface crosslinking agent.

Accordingly, the superabsorbent polymer prepared can satisfy the aforementioned appropriate surface tension and excellent absorbent properties (properties (i) to (iv) below).

Hereinafter, the preparation method of a superabsorbent polymer according to an embodiment of the present invention will be described in detail for each step.

### (Polymerization step)

The preparation method of a superabsorbent polymer according to an embodiment of the present invention comprises a step of forming a hydrogel polymer by polymerizaing a monomer mixture comprising an acrylic acid-based monomer having at least partially neutralized acidic groups, an internal crosslinking agent, a surfactant having an HLB of 1 to 10 and a weight-average molecular weight of 200 to 1,500 g/mol, and an encapsulated foaming agent.

Here, for the internal crosslinking agent, surfactant having an HLB of 1 to 10 and a weight-average molecular weight of 200 to 1,500 g/mol, and encapsulated foaming agent, the contents described in the section of the superabsorbent polymer are all equally applied.

The polymerization step is a step of forming a hydrogel polymer by thermal polymerization or photo-polymerization of a monomer composition comprising: a monomer mixture containing an acrylic acid-based monomer having an acidic group, and a surfactant, a foaming agent, an internal crosslinking agent, and/or a polymerization initiator.

First, the acrylic acid-based monomer may be any monomer commonly used in the preparation of a superabsorbent polymer. As a non-limiting example, the acrylic acid-based monomer may be a compound represented by the following Chemical Formula 1:

[Chemical Formula 1] R₁-COOM¹

In the Chemical Formula 1, R₁ is an alkyl group having 2 to 5 carbon atoms comprising an unsaturated bond, and M1 is a hydrogen atom, a monovalent or divalent metal, an ammonium group, or an organic amine salt.

Preferably, the monomer may be at least one selected from the group consisting of acrylic acid, methacrylic acid, and monovalent metal salts, divalent metal salts, ammonium salts, and organic amine salts of these acids. In this way, when acrylic acid or a salt thereof is used as a water-soluble ethylenically unsaturated monomer, it is advantageous because a superabsorbent polymer with improved absorbency can be obtained. In addition, as the monomer, anionic monomers and salts thereof such as maleic anhydride, fumaric acid, crotonic acid, itaconic acid, 2-acryloylethane sulfonic acid, 2-methacryloylethane sulfonic acid, 2-(meth)acryloylpropane sulfonic acid, or 2-(meth)acrylamide-2-methyl propane sulfonic acid; non-ionic hydrophilic containing monomers such as (meth)acrylamide, N-substituted (meth)acrylate, 2-hydroxyethyl (meth)acrylate, 2-hydroxypropyl (meth)acrylate, methoxypolyethylene glycol (meth)acrylate, or polyethylene glycol (meth)acrylate; and amino group-containing unsaturated monomers and quaternized products thereof such as (N,N)-dimethylaminoethyl (meth)acrylate or (N,N)-dimethylaminopropyl (meth)acrylamide; may be used at least one selected from the group consisting thereof.

Here, the acrylic acid-based monomer has acidic groups, and at least a part of the acidic groups are neutralized. Preferably, it may be performed in a manner of partially neutralizing the monomer with an alkaline substance, and examples of usable neutralizing agents include basic substances such as sodium hydroxide, potassium hydroxide, and ammonium hydroxide.

At this time, the degree of neutralization of the monomer may be 40 to 95 mol%, or 40 to 80 mol%, or 45 to 75 mol%. The range of the degree of neutralization may vary depending on final physical properties, but if the degree of neutralization is too high, neutralized monomers may precipitate, making it difficult for polymerization to proceed smoothly, and conversely, if the degree of neutralization is too low, the absorbency of the polymer may be significantly reduced and it may exhibit properties such as elastic rubber that is difficult to handle.

A method for preparing a superabsorbent polymer according to an embodiment of the present invention uses, in a polymerization step, a surfactant having a specific HLB range and a weight-average molecular weight in combination with an encapsulated foaming agent.

In the polymerization step, by using in combination with an encapsulated foaming agent and a low molecular weight surfactant having an HLB of 1 to 10 and a weight-average molecular weight of 200 to 1,500 g/mol, the foaming effect is maximized due to formation of an optimal micellar structure in the neutralizing solution, thereby enabling excellent water retention capacity and absorption rate. In particular, by increasing the surface tension of the final superabsorbent polymer through hydrophobicity, when the superabsorbent polymer is applied to a product it is not detached from the product, thus further improving absorption durability. Preferably, the surfactant is a non-polymeric surfactant.

Meanwhile, when a carbonate-based foaming agent, which is generally used, is employed, it is difficult to control the foaming performance, and accordingly it may be difficult to achieve the intended degree of surface tension improvement and absorptive properties. In contrast, the encapsulated foaming agent of the present invention expands within the polymerization temperature range and then contracts, making control of the foaming performance easy, facilitating the formation of pores as intended, and, when used in combination with the aforementioned low-molecular-weight surfactant having the specific HLB value, enabling a synergistic effect.

In addition, the monomer composition may further include, as necessary, additives such as a polymerization initiator, a thickener, a plasticizer, a preservation stabilizer, and an antioxidant.

As the polymerization initiator, a thermal polymerization initiator or a photopolymerization initiator may be used depending on the polymerization method. However, even by the photo-polymerization method, a certain amount of heat is generated by ultraviolet irradiation, etc., and additionally, since heat is generated to some extent as the polymerization reaction-an exothermic reaction-proceeds, a thermal polymerization initiator may be additionally included.

Here, as the photopolymerization initiator, for example, one or more compounds selected from the group consisting of benzoin ether, dialkylacetophenone, hydroxyl alkylketone, phenyl glyoxylate, benzyl dimethyl ketal, acyl phosphine and alpha-aminoketone (α-aminoketone) may be used. Among these, as a specific example of an acyl phosphine, commercially available lucirin TPO, that is, 2,4,6-trimethyl-benzoyl-trimethyl phosphine oxide, or Phenylbis(2,4,6-trimethylbenzoyl)phosphine oxide may be used. More diverse photopolymerization initiators are disclosed on page 115 of Reinhold Schwalm's "UV Coatings: Basics, Recent Developments and New Application (Elsevier 2007)", and reference can be made thereto.

As the thermal polymerization initiator, one or more compounds selected from the group consisting of persulfate-based initiators, azo-based initiators, hydrogen peroxide, and ascorbic acid may be used. Specifically, examples of the persulfate-based initiator include sodium persulfate (Sodium persulfate; Na₂S₂O₈), potassium persulfate (Potassium persulfate; K₂S₂O₈), ammonium persulfate (Ammonium persulfate; (NH₄)₂S₂O₈), and the like. In addition, examples of the azo-based initiator include 2,2-azobis(2-amidinopropane) dihydrochloride, 2,2-azobis-(N,N-dimethylene)isobutyramidine dihydrochloride, 2-(carbamoylazo)-isobutyronitrile, 2,2-azobis[2-(2-imidazolin-2-yl)propane] dihydrochloride, 4,4-azobis-(4-cyanovaleric acid), and the like. Various other thermal polymerization initiators are disclosed on page 203 of Odian's work "Principle of Polymerization" (Wiley, 1981), which may be referred to.

The polymerization initiator may be used in an amount of 10 ppmw to 10,000 ppmw based on the weight of the acrylic acid-based monomer. When present within the above content range, a sufficient level of strength can be achieved through adequate crosslinking, and sufficient absorbent properties can be realized by introducing an appropriate crosslinked structure. Preferably, the polymerization initiator may be present in an amount of 50 ppmw or more, 80 ppmw or more, 100 ppmw or more, or 500 ppmw or more, and 10,000 ppmw or less, 9,000 ppmw or less, 7,000 ppmw or less, or 5,000 ppmw or less. More specifically, it may be included in an amount of 50 ppmw to 5,000 ppmw, 80 ppmw to 5,000 ppmw, or 80 ppmw to 3,000 ppmw. The stated amounts refer to the total amount when the photo-polymerization initiator and the thermal polymerization initiator are used in combination.

When the concentration of the polymerization initiator is too low, the polymerization rate may decrease, and a large amount of residual monomer may be eluted from the final product, which is undesirable. Conversely, when the concentration of the polymerization initiator is too high, the polymer chains forming the network become shorter, resulting in an increased content of water-soluble components and reduced absorbency under pressure, thus deteriorating the physical properties of the resin, which is undesirable.

And, such a monomer composition can be prepared in the form of a solution in which raw materials such as the aforementioned acrylic acid-based monomer, internal crosslinking agent, surfactant, foaming agent, and polymerization initiator are dissolved in a solvent.

In this case, any solvent capable of dissolving the above-mentioned raw materials may be used, without limitation as to its composition. For example, the solvent may be water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethyl ether, toluene, xylene, butyrolactone, carbitol, methyl cellosolve acetate, N,N-dimethylacetamide, or a mixture thereof.

The step of forming the hydrogel polymer by polymerization of the monomer composition can be carried out by a conventional polymerization method, and the process is not particularly limited. As a non-limiting example, the polymerization method may be broadly divided into thermal polymerization and photopolymerization according to the type of polymerization energy source. In the case of thermal polymerization, it may be carried out in a reactor having a stirring shaft such as a kneader, and in the case of photopolymerization, it may be carried out in a reactor equipped with a movable conveyor belt.

For example, a hydrogel polymer can be obtained by putting the monomer composition into a reactor such as a kneader equipped with a stirring shaft, and thermally polymerization it by supplying hot air to the reactor or by heating the reactor. At this time, the hydrogel polymer discharged from the reactor outlet can be recovered as particles ranging from several millimeters to several centimeters, depending on the shape of the stirring shaft provided in the reactor. Specifically, the hydrogel polymer thus obtained may take various forms depending on the concentration and injection rate of the monomer composition, and typically a hydrogel polymer having a (weight-average) particle diameter of 2 to 50 mm can be obtained.

And, as another example, when photopolymerization of the monomer composition is carried out in a reactor equipped with a movable conveyor belt, a sheetshaped hydrogel polymer can be obtained. At this time, the thickness of the sheet may vary depending on the concentration and injection speed of the injected monomer composition, but it is usually preferably controlled to a thickness of 0.5 to 10 cm in order to ensure that the entire sheet can be uniformly polymerized while securing the production speed and the like.

The typical moisture content of the hydrogel polymer obtained by such a method may be 40% to 80% by weight. Meanwhile, in the entire present specification, "moisture content" is the content of moisture occupied with respect to the total weight of the hydrogel polymer, and means a value obtained by subtracting the weight of the polymer in a dry state from the weight of the hydrogel polymer. Specifically, it is defined as a value calculated by measuring the weight loss due to moisture evaporation in the polymer during the process of raising the temperature of the polymer by infrared heating and drying it. At this time, the drying conditions are to raise the temperature from room temperature to 180 °C and then maintain it at 180 °C, and the total drying time is set to 20 minutes comprising 5 minutes of the temperature rising stage, and the moisture content is measured.

The typical moisture content of the hydrogel polymer obtained by the above method may be 40 to 80 wt%. Meanwhile, "moisture content" means the amount of water relative to the total weight of the hydrogel polymer, and refers to the value obtained by subtracting the weight of the dry polymer from the weight of the hydrogel polymer. Specifically, it is defined as the value calculated by measuring the weight loss due to moisture evaporation during the process of raising the polymer's temperature by infrared heating and drying. In this case, the drying conditions for measuring the moisture content involve raising the temperature from room temperature to about 180 °C and maintaining it for about 40 minutes.

### (Drying, Pulverizing, and Classifying steps)

Next, it comprises a step of forming base resin powder by drying, pulverizing, and classifying the hydrogel polymer.

Specifically, a step of drying the obtained hydrogel polymer is performed. If necessary, in order to increase the efficiency of the drying step, a step of coarsely pulverizing the hydrogel polymer may be further performed before the drying step.

At this time, there is no limitation on the configuration of the pulverizer used, but specifically, it may include any one selected from the group of pulverizing equipment consisting of a vertical pulverizer, a turbo cutter, a turbo grinder, a rotary cutter mill, a cutter mill, a disc mill, a shred crusher, a crusher, a chopper, and a disc cutter, but it is not limited to the above examples.

At this time, the coarse pulverizing step may pulverize so that the particle diameter of the hydrogel polymer is 2 to 10 mm. Pulverizing to a particle diameter of less than 2 mm is not technically easy due to the high moisture content of the hydrogel polymer, and also a phenomenon of agglomeration between the pulverized particles may appear. On the other hand, in the case of pulverizing to a particle diameter exceeding 10 mm, the effect of increasing the efficiency of the subsequent drying step may be insignificant.

Drying is performed on the hydrogel polymer immediately after polymerization, which has been coarsely pulverized as described above or has not undergone the coarse pulverizing step. At this time, the drying temperature of the drying step may be 150 to 250 °C. When the drying temperature is less than 150 °C, the drying time becomes excessively long and there is a concern that the physical properties of the finally formed superabsorbent polymer may be deteriorated, and when the drying temperature exceeds 250 °C, only the polymer surface is excessively dried, which may cause fine powder to be generated in the subsequent pulverizing process and there is a concern that the physical properties of the finally formed superabsorbent polymer may be deteriorated. Therefore, preferably, the drying may be carried out at a temperature of 150 to 200 °C, more preferably at a temperature of 170 to 195 °C.

Meanwhile, in the case of the drying time, it may be carried out for 20 to 90 minutes in consideration of process efficiency and the like, but is not limited thereto.

The dry method of the dry step also can be selected and used without limitation of its configuration as long as it is commonly used for the dry process of hydrogel polymer. Specifically, the dry step can be carried out by methods such as hot air supply, infrared irradiation, microwave irradiation, or ultraviolet irradiation. The moisture content of the polymer after such a dry step may be about 0.1 to about 10% by weight.

Next, a step of pulverizing the dried polymer obtained through such a drying step is performed.

The powder obtained after the pulverizing step may have a particle diameter of 150 to 850 µm. As a pulverizer used to pulverize to such a particle diameter, specifically, a pin mill, a hammer mill, a screw mill, a roll mill, a disc mill, or a jog mill can be used, but it is not limited to the above examples.

In addition, in order to manage the physical properties of the superabsorbent polymer particles that are finally commercialized after such a pulverization step, a separate process of classifying the polymer particles obtained after pulverizing according to particle diameter can be undergone. Preferably, the particles are classified into particles having a particle diameter of 150 to 850 *µ*m, and only polymer particles having such a particle diameter can be commercialized after undergoing a surface crosslinking reaction step.

More specifically, the classified base resin powder has a particle diameter of 150 to 850 *µ*m, and may comprise 50% by weight or more of particles having a particle diameter of 300 to 600 *µ*m.

In addition, the base resin may have a centrifuge retention capacity (CRC) measured according to EDANA WSP 241.3 of 42 g/g or more. Preferably, it may be 42 g/g to 45 g/g, 42 g/g to 44.5 g/g, or 42.5 g/g to 44.5 g/g. Its specific measuring method will be described in more detail in the experimental examples to be described later.

The base resin may have a vortex absorption rate of 50 seconds or less. Preferably, it may be 48 seconds or less, or 48 seconds or less. The lower limit of the vortex absorption rate may be 10 seconds or more, 15 seconds or more. Its specific measuring method will be described in more detail in the experimental examples to be described later.

### (Surface crosslinking step)

Next, the preparation method of a superabsorbent polymer according to an embodiment of the present invention comprises a step of preparing a polyacrylate-based superabsorbent polymer in which a surface crosslinking layer is formed on the surface of the base resin powder by heat-treating the base resin powder in the presence of a surface crosslinking agent.

The surface crosslinking step is to induce a crosslinking reaction on the surface of the base resin in the presence of a surface crosslinking agent, and unsaturated bonds of acrylic acid-based monomers that were not crosslinked and remained on the surface are crosslinked by the surface crosslinking agent, so that a polyacrylate-based superabsorbent polymer with increased surface crosslinking density is formed.

Specifically, a surface crosslinking layer can be formed on at least a part of the surface of the base resin powder by a heat-treating process in the presence of a surface crosslinking agent. According to the heat-treating process, the external crosslinking density increases because the surface crosslinking density increases, whereas the internal crosslinking density does not change, so the prepared superabsorbent polymer in which the surface crosslinking layer is formed has a structure in which the external crosslinking density is higher than the internal crosslinking density.

In the surface crosslinking step, a surface crosslinking agent composition comprising an alcohol-based solvent and water in addition to the surface crosslinking agent may be used.

Meanwhile, as the surface crosslinking agent comprised in the surface crosslinking agent composition, any crosslinking agent component that has been conventionally used for the preparation of a superabsorbent polymer can be used without any particular limitation. For example, the surface crosslinking agent may comprise at least one polyol selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol, and glycerol; at least one carbonate-based compound selected from the group consisting of ethylene carbonate and propylene carbonate; epoxy compounds such as ethylene glycol diglycidyl ether; oxazoline compounds such as oxazolidinone; polyamine compounds; oxazoline compounds; mono-, di-, or polyoxazolidinone compounds; or cyclic urea compounds; and the like. Preferably, the same ones as the aforementioned internal crosslinking agent can be used, for example, alkylene glycol diglycidyl ether-based compounds such as propylene glycol diglycidyl ether and ethylene glycol diglycidyl ether can be used.

Such a surface crosslinking agent may be used in an amount of 0.001 to 2 parts by weight based on 100 parts by weight of the base resin powder. Preferably, it may be used in an amount of 0.005 parts by weight or more, 0.01 parts by weight or more, or 0.02 parts by weight or more, and 0.5 parts by weight or less, 0.3 parts by weight or less. By controlling the content range of the surface crosslinking agent to the aforementioned range, a superabsorbent polymer exhibiting various physical properties such as excellent absorption performance and liquid permeability can be prepared.

Meanwhile, the surface crosslinking agent is added to the base resin powder in a state of a surface crosslinking agent composition comprising it, and there is no particular limitation on the method of adding the surface crosslinking agent composition. For example, a method of putting both the surface crosslinking agent composition and the base resin powder into a reaction vessel and mixing them, a method of spraying the surface crosslinking agent composition on the base resin powder, a method of continuously supplying and mixing the base resin powder and the surface crosslinking agent composition to a mixer operated continuously, etc. can be used.

And, the surface crosslinking agent composition may further comprise water and/or a hydrophilic organic solvent as a medium. Hereby, there is an advantage that the surface crosslinking agent and the like can be evenly dispersed on the base resin. At this time, the content of water and the hydrophilic organic solvent can be applied by adjusting the addition ratio with respect to 100 parts by weight of the base resin powder for the purpose of inducing even dissolution/dispersion of the surface crosslinking agent and preventing agglomeration of the base resin, and at the same time optimizing the surface penetration depth of the surface crosslinking agent.

The surface crosslinking step can be carried out by heat-treating at a temperature of 110 °C to 200 °C, or 110 °C to 150 °C for 30 minutes or more. More specifically, the surface crosslinking can be carried out by heat-treating at the maximum reaction temperature for 30 to 80 minutes, or 40 minutes to 70 minutes, with the aforementioned temperature as the maximum reaction temperature.

By satisfying such surface crosslinking process conditions (especially, temperature rising conditions and reaction conditions at the maximum reaction temperature), a superabsorbent polymer appropriately satisfying physical properties such as better pressurized liquid permeability can be prepared.

The temperature rising means for the surface crosslinking reaction is not particularly limited. It can be heated by supplying a heat medium or directly supplying a heat source. At this time, as the type of usable heat medium, heated fluid such as steam, hot air, or hot oil can be used, but it is not limited thereto, and also the temperature of the supplied heat medium can be appropriately selected in consideration of the means of the heat medium, the temperature rising rate, and the temperature rising target temperature. Meanwhile, as the directly supplied heat source, a heating method through electricity or a heating method through gas can be mentioned, but it is not limited to the above examples.

Meanwhile, in the preparation method of a superabsorbent polymer according to an embodiment of the present invention, in order to further improve liquid permeability and the like, various multivalent metal salts such as aluminum salts such as aluminum sulfate can be further used during surface crosslinking. Such multivalent metal salts may be included on the surface crosslinking layer of the finally prepared superabsorbent polymer.

### Absorbent article

According to another embodiment of the present invention, the superabsorbent polymer is used in an absorbent article to realize excellent absorption durability.

In the case of the absorbent article, components commonly used in the art can be used, and also various conventionally applied laminated structures can be applied without particular limitation. For example, in the case of the absorbent article, a sample can be prepared in a manner that a liquid-impermeable backsheet, an absorbent layer comprising a superabsorbent polymer, and a liquid-permeable topsheet are sequentially laminated.

The liquid-impermeable backsheet is a material in which penetration of liquid is blocked, and materials commonly used in the art can be used without particular limitation. For example, a nonwoven fabric prepared by spinning an olefin resin such as polyethylene or polypropylene can be used. The preparation method of the nonwoven fabric is not particularly limited, and those prepared by processing methods such as air-laid, thermal bonding, spunlace, spunbond, meltblown, and stitchbond can be used without limitation. In addition, a breathable waterproof film and the like may be additionally included as necessary.

The absorbent layer may include at least one resin layer comprising the aforementioned superabsorbent polymer and at least one nonwoven fabric, respectively.

In this case, the preparation of the resin layer comprising the superabsorbent polymer can be applied by a method commonly used in the art, for example, it can be prepared through a method of uniformly applying the superabsorbent polymer to the nonwoven fabric layer. For example, a uniform absorbent layer can be prepared by continuously supplying the superabsorbent polymer to the nonwoven fabric layer using a roll feeder.

According to an embodiment of the present invention, the absorbent layer may be a structure in which an upper layer nonwoven fabric, a first resin layer, a middle layer nonwoven fabric, a second resin layer, and a lower layer nonwoven fabric are sequentially laminated. The layers can be laminated by a method commonly used in the art, for example, the layers can be laminated using an adhesive. In addition, an ADL (acquisition distribution layer) can be additionally laminated between the absorbent layer and the liquid-permeable topsheet to improve diffusibility.

In this case, the nonwoven fabric may be a hydrophilic nonwoven fabric prepared using synthetic fibers or natural fibers such as polypropylene, polyethylene, polyester, polyethylene terephthalate, rayon, cotton, or cotton wool. The preparation method of the nonwoven fabric is not particularly limited, and those prepared by processing methods such as air-laid, thermal bonding, spunlace, spunbond, meltblown, and stitchbond can be used without limitation.

The liquid-permeable topsheet is made of a hydrophilic material that allows liquid to rapidly penetrate, and any materials conventionally used in the art may be employed without particular limitation. Further, a material that does not irritate the user's skin may be appropriately selected. For example, it may be a hydrophilic nonwoven fabric, an apertured film such as an apertured polyethylene film, or a foamed film such as a polyurethane foam; one or more of these may be laminated and used. More specifically, the hydrophilic nonwoven fabric may be manufactured from synthetic fibers or natural fibers such as polypropylene, polyethylene, polyester, polyethylene terephthalate, rayon, cotton, or cotton wool. The method of manufacturing the nonwoven fabric is not especially limited, and those produced by processing methods such as air-laid, thermal bonding, spunlace, spunbond, meltblown, and stitchbond may be used without limitation.

As described above, by using a combination of a surfactant having an HLB of 1 to 10 and a weight-average molecular weight of 200 to 1,500 g/mol and a foaming agent, the superabsorbent polymer can maximize the foaming effect due to the formation of an optimal micelle structure in the neutralization solution, thereby achieving excellent retention capacity and absorption rate. In particular, due to hydrophobicity, the surface tension of the final superabsorbent polymer is increased, thereby further improving absorption durability by preventing the superabsorbent polymer from detaching from the product. In particular, the present superabsorbent polymer exhibits excellent interaction with the adhesive layer and provides excellent absorption durability under absorption conditions.

The superabsorbent polymer has very excellent physical properties of absorption durability (Absorption durability), which indicates the degree of detachment of the superabsorbent polymer from the absorbent article when a physical impact is applied to the absorbent article under salt water absorption conditions when prepared as an absorbent article.

Specifically, the absorption durability measured according to the following method is 1,500 times or more, preferably 2,000 times or more, 3,000 times or more, or may be 2,000 to 3,000 times.

The measuring method of the absorption durability is as follows. 70 ml of a 0.9% by weight sodium chloride (NaCl) aqueous solution at 23±1 °C comprising a dye was injected into a sample of an absorbent article comprising an absorbent body comprising an absorbent resin, and it was absorbed for 5 minutes. An impact test of lifting the sample vertically by 2 cm from the ground and then freely dropping it was repeated, and the number of times that half of the area was detached based on the area where the dye was absorbed in the sample was measured. More details will be described in the experimental examples section to be described later.

The superabsorbent polymer can absorb salt water within a short time without deteriorating the absorbency even when salt water is cumulatively injected when prepared as an absorbent article. Specifically, the absorbent article has excellent physical properties of cumulative absorbent time (Absorbent time_1^{st}/2^{nd}/3^{rd}) for salt water, and the total sum of absorption times when salt water is injected 3 times at 20-minute intervals to be absorbed is 100 seconds or less, preferably 95 seconds or less, 90 seconds or less, 60 to 100 seconds, or 60 to 90 seconds.

The cumulative absorption time may be measured as follows, a sample of an absorbent article comprising an absorbent layer comprising a superabsorbent polymer is placed in a symmetric U-shaped frame having a 70° slope (the bottom of the U-shaped frame is a concave shape of an arc having a central angle of 90° with a radius of 5 cm, and the sides extending to both sides from the part where the arc ends have a 70° slope).

Next, 50 ml of a 0.9% by weight sodium chloride (NaCl) aqueous solution at 35±1 °C was injected into the sample and the time for all the salt water to be absorbed was measured. The time for all the salt water to be absorbed was visually evaluated as the time point at which the salt water disappears from the uppermost layer of the absorbent article. Subsequently, the cumulative absorption time was measured by repeating 3 times at 20-minute intervals from the time of starting to inject the salt water, and the absorption time for all of the 1st, 2nd, and 3rd rounds may be independently less than 40 seconds, less than 38 seconds, or less than 36 seconds, and may be 10 seconds or more, or 15 seconds or more. At the same time, the total sum thereof may satisfy the aforementioned range (100 seconds or less). More details will be described in the experimental examples section to be described later.

Hereinafter, the operation and effects of the present invention will be described more specifically through specific examples of the present invention. However, these examples are presented only as examples of the present invention, and the scope of the present invention's rights is not determined thereby.

### [Examples]

### <Preparation of superabsorbent polymer>

### Example 1

### (Step 1: polymerization)

In a 2L glass container equipped with a stirrer and a thermometer, 100 g of acrylic acid, 0.2 g of ethylene glycol diglycidyl ether as an internal crosslinking agent (2,000 ppmw relative to 100 parts by weight of acrylic acid), 0.008 g of phenylbis(2,4,6-trimethylbenzoyl)-phosphine oxide as a photopolymerization initiator (80 ppmw relative to 100 parts by weight of acrylic acid), and 0.2 g of sodium persulfate (SPS) as a thermal polymerization initiator (2,000 ppmw relative to 100 parts by weight of acrylic acid) were added and dissolved, and then mixed with 128 g of a 31.5% caustic soda solution. Calcium stearate (HLB 5/Mw 607, 400 ppmw relative to 100 parts by weight of acrylic acid) as a surfactant was dispersed in 63.5 g of water, and 0.25 g of F36D (2,000 ppmw relative to 100 parts by weight of acrylic acid) as a foaming agent was mixed therewith to prepare a monomer aqueous solution (degree of neutralization: 75 mol%; solid content: 43% by weight).

When the temperature of the monomer aqueous solution rose to 40 °C due to the heat of neutralization, the mixture was irradiated with ultraviolet rays (irradiance: 10 mV/cm²) for 1 minute to carry out UV polymerization, thereby obtaining a hydrogel polymer sheet.

The obtained hydrogel polymer sheet was passed through a chopper having a hole size of 16 mm to prepare a pulverized material (crumb).

### (Step 2: dry, pulverize, and classify)

Next, the pulverized material (crumb) was dried in an oven capable of moving the air volume up and down. The drying was performed in multiple stages, and specifically, using an air flow oven, 185 °C hot air was allowed to flow from the bottom to the top for 15 minutes and from the top to the bottom for 15 minutes to be uniformly dried, and the moisture content of the dried body after drying was set to be 2% or less.

The dried hydrogel polymer was pulverized using a pulverizer and classified with a standard mesh of ASTM standard to obtain a base resin powder having a particle size of 150 to 850 µm.

### (Step 3: surface crosslinking)

First, a surface crosslinking composition comprising 3.5 parts by weight of water, 3.0 parts by weight of propylene glycol, and 0.15 parts by weight of ethylene glycol diglycidyl ether (EGDGE) was prepared (based on 100 parts by weight of the base resin powder).

Thereafter, 100 parts by weight of the base resin powder and 6.62 parts by weight of the prepared surface crosslinking composition were evenly mixed, and the surface crosslinking mixture was supplied to a surface crosslinking reactor to proceed with the surface crosslinking reaction of the base resin particles at 120 °C for 30 minutes to prepare the final superabsorbent polymer.

### Examples 2 to 7 and Comparative Examples 1 to 8

A superabsorbent polymer was prepared in the same manner as in Example 1, except that the components and amounts shown in Table 1 below were used in the polymerization step.

**[Table 1]**

| Category | Internal crosslinking agent(A) (type/content^{*}) | Surfactant(B) (type/content^{*}) | Foaming agent(C) (type/content^{*}) |
|---|---|---|---|
| Example 1 | A-1/2,000 | B-1/400 | C-1/2,000 |
| Example 2 | A-1/2,000 | B-1/400 | C-1/2,500 |
| Example 3 | A-1/2,000 | B-1/400 | C-1/3,000 |
| Example 4 | A-1/2,000 | B-1/600 | C-1/2,000 |
| Example 5 | A-1/2,000 | B-2/400 | C-1/2,500 |
| Example 6 | A-1/2,000 | B-2/600 | C-1/2,000 |
| Example 7 | A-1/2,000 | B-1/400 | C-2/2,000 |
| Comparative Example 1 | A-2/3,000 + A-3/30 | B-3/400 | - |
| Comparative Example 2 | A-2/3,000 + A-3/30 | B-3/400 | - |
| Comparative Example 3 | A-2/5,000 + A-3/50 | B-3/400 | - |
| Comparative Example 4 | A-1/2,000 | B-3/400 | C-1/2,000 |
| Comparative Example 5 | A-1/2,000 | B-1/400 | - |
| Comparative Example 6 | A-1/2,000 | | C-1/2,000 |
| Comparative Example 7 | A-1/2,000 | B-4/400 | C-1/2,000 |
| Comparative Example 8 | A-1/2,000 | B-1/400 | C-3/2,000 |
| Internal crosslinking agent(A) | | | |
| A-1: EGDGE(ethylene glycol diglycidyl ether) | | | |
| A-2: PEGDGE(Poly(ethylene glycol) diglycidyl ether, Mw=523) | | | |
| A-3: AMA(allyl methacrylate) | | | |
| Surfactant(B) | | | |
| B-1: Calcium stearate(HLB 5, Mw=607) | | | |
| B-2: Glyceryl monolaurate(HLB 5, Mw=274.4) | | | |
| B-3: Sodium dodecyl sulfate(HLB 40, Mw=288) | | | |
| B-4: PEG-PPG-PEG block copolymer(HLB 8, Mw=5,800) | | | |
| Foaming agent(A) | | | |
| C-1: F36D(MATSUMOTO) | | | |
| C-2: MS140D(Dongjin Semichem) | | | |
| C-3: Sodium bicarbonate | | | |

### [Experimental Example 1: Evaluation of Physical Properties of superabsorbent polymer]

The physical properties of the base resin of Step 2 and the final superabsorbent polymer prepared in the Examples and Comparative Examples were evaluated in the following manner, and the results are shown in Table 2.

### (1) Centrifuge Retention Capacity (CRC)

For each of the base resin prepared in Step 2 of the Examples and Comparative Examples and the final superabsorbent polymer, those having a particle diameter of 150 to 850 *µ*m were taken, and the centrifuge retention capacity (CRC) by the absorption capacity under no load was measured according to the European Disposables and Nonwovens Association (EDANA) standard EDANA WSP 241.3.

Specifically, in the base resin and superabsorbent polymer respectively obtained through the Examples and Comparative Examples, the resin classified with a #30-50 sieve was obtained. WO(g) (about 0.2g) of such resin was uniformly put into a nonwoven fabric bag and sealed. Then, it was immersed in physiological saline (0.9% by weight) at room temperature. After 30 minutes had elapsed, moisture was removed from the bag for 3 minutes under the condition of 250G using a centrifuge, and the mass W2(g) of the bag was measured. In addition, the same operation was performed without using the resin, and then the mass W1(g) at that time was measured. Using each obtained mass, CRC (g/g) was calculated according to the following Equation 1. $CRC \left(g/g\right) = \left\{\left[W2\left(g\right)-W1\left(g\right)\right]/W0\left(g\right)\right\} - 1$

### (2) Absorbency Under Pressure (AUP)

For the superabsorbent polymer prepared in the Examples and Comparative Examples, particles having a particle diameter of 150 µm to 850 µm were taken, and 0.9 psi absorbency under pressure (AUP) was measured according to the method of the European Disposables and Nonwovens Association (EDANA) standard EDANA method WSP 242.3.

First, a 400 mesh stainless steel wire mesh was installed on the bottom of a plastic cylinder with an inner diameter of 60 mm. WO(g) of the superabsorbent polymer was uniformly spread on the wire mesh under conditions of room temperature and 50% humidity, and a piston capable of uniformly applying an additional load of 0.9 psi on it was made to be slightly smaller than the outer diameter of 60 mm and to have no gap with the inner wall of the cylinder and to not be hindered in upward and downward movement. At this time, the weight W3(g) of the device was measured.

A glass filter with a diameter of 90 mm and a thickness of 5 mm was placed inside a petri dish with a diameter of 150 mm, and physiological saline composed of 0.9% by weight of sodium chloride was made to be at the same level as the upper surface of the glass filter. One sheet of filter paper with a diameter of 90 mm was placed on it. The measurement device was placed on the filter paper, and the liquid was absorbed under load for 1 hour. After 1 hour, the measurement device was lifted, and its weight W4(g) was measured. Using each obtained mass, absorbency under pressure (g/g) was calculated according to the following Equation 2. $AUP \left(g/g\right) = \left[W4\left(g\right)-W3\left(g\right)\right] / W 0 \left(g\right)$

### (3) Vortex absorption rate (seconds)

For each of the base resin prepared in Step 2 and the final superabsorbent polymer in the Examples and Comparative Examples, it was measured in seconds according to the method described in International Patent Publication No. 1987-003208.

First, for each of the base resin and the final superabsorbent polymer, particles having a particle diameter of 150 µm to 850 µm were taken, and 2 g of the resin sample was put into 50 mL of physiological saline (24.4±0.2 °C), and it was stirred at 600 rpm to measure the time until the vortex disappeared in seconds.

### (4) Surface Tension (mN/m)

For the superabsorbent polymer prepared in the Examples and Comparative Examples, the surface tension according to the Wilhelmy plate method was measured.

First, 1g of the superabsorbent polymer was put into 200 ml of salt water and stirred at 500 rpm for 5 minutes at a room temperature of 24±2 °C. After 5 minutes, the solution was filtered through filter paper to obtain a filtered solution, and then a Process tensiometer (manufactured by KRUSS) was used to measure the force when the plate tip was separated from the solution after the filtrate to be measured touched the surface of the plate tip.

**[Table 2]**

| Category | Base resin physical properties | | Superabsorbent polymer physical properties | | | |
|---|---|---|---|---|---|---|
| | CRC (g/g) | Vortex (sec) | CRC (g/g) | 0.9 psi AUP (g/g) | Vortex (sec) | Surface tension (mN/m) |
| Example 1 | 44.2 | 48 | 34.2 | 14.3 | 29 | 69 |
| Example 2 | 43.8 | 46 | 33.8 | 15.8 | 28 | 68 |
| Example 3 | 42.9 | 43 | 33.5 | 16.1 | 26 | 66 |
| Example 4 | 43.3 | 45 | 32.3 | 15.2 | 27 | 65 |
| Example 5 | 43.7 | 45 | 33.7 | 16.1 | 30 | 68 |
| Example 6 | 43.2 | 42 | 33.2 | 15.7 | 26 | 64 |
| Example 7 | 44.4 | 47 | 34.4 | 14.3 | 29 | 70 |
| Comparative Example 1 | 42.2 | 62 | 31.5 | 13.8 | 47 | 61 |
| Comparative Example 2 | 41.5 | 60 | 30.7 | 15.2 | 45 | 58 |
| Comparative Example 3 | 38.1 | 57 | 31.9 | 14.8 | 48 | 61 |
| Comparative Example 4 | 43.1 | 49 | 32.8 | 14.8 | 32 | 53 |
| Comparative Example 5 | 48.2 | 65 | 36.7 | 12.2 | 56 | 61 |
| Comparative Example 6 | 44.3 | 55 | 33.5 | 13.6 | 47 | 62 |
| Comparative Example 7 | 40.5 | 65 | 32.2 | 13.4 | 50 | 52 |
| Comparative Example 8 | 43.9 | 62 | 33.1 | 14.7 | 49 | 54 |

As can be seen in Table 2, the superabsorbent polymer of the present invention maximizes the foaming effect due to the optimal micelle structure formation in the neutralization solution by using a combination of a surfactant having an HLB of 1 to 10 and a weight-average molecular weight of 200 to 1,500 g/mol and a foaming agent, thereby improving excellent retention capacity and absorption rate, and in particular, it was confirmed that absorption durability can be further improved because the superabsorbent polymer is not detached from the product when applied to the product by increasing the surface tension of the final superabsorbent polymer due to hydrophobicity. In the case of Comparative Examples using a polymeric surfactant that does not satisfy the HLB range or has a large weight-average molecular weight value, absorption properties are lower than those of the Examples, and surface tension is significantly lowered, so it was confirmed that durability may be significantly deteriorated when applied to an actual product.

### [Experimental Example 2: Evaluation of Physical Properties of Absorbent Articles]

First, using the superabsorbent polymer prepared in the Examples and Comparative Examples, an absorbent article was prepared according to the following method.

A liquid-impermeable backsheet, an absorbent layer comprising a superabsorbent polymer, and a liquid-permeable topsheet were each cut to 47 cm * 19 cm, and these were sequentially laminated to prepare a superabsorbent polymer sample. The absorbent layer was prepared by sequentially laminating an upper layer nonwoven fabric, a first resin layer, a middle layer nonwoven fabric, a second resin layer, and a lower layer nonwoven fabric using a styrene-based adhesive. An ADL (acquisition distribution layer) was additionally laminated between the absorbent layer and the topsheet to improve diffusibility. In the first resin layer and the second resin layer, 6.5g of the superabsorbent polymer prepared in the Examples and Comparative Examples were each applied by feeding with a roll feeder.

For the prepared absorbent article samples, the physical properties were evaluated in the following manner, and the results are shown in Table 3.

### (1) Absorption Durability (count)

70ml of a 0.9 wt % sodium chloride (NaCl) aqueous solution at 23 ± 1 °C was injected into a sample (47 cm * 19 cm) comprising an absorbent layer containing 13 g of a superabsorbent polymer, and allowed to absorb for 5 minutes. For clearer measurement, a dye was added to the sodium chloride solution, and the dyed saline was injected at a point 7.5 cm above the center of the sample; then the area to which the saline was absorbed was calculated.

Next, the impact test was performed by repeatedly lifting the sample, in which the brine had been absorbed, vertically 2 cm above the ground and then freely dropping it; the number of drops required until half of the dye-absorbed area on the sample was detached was measured, and the results are shown in Table 3.

### (2) Cumulative absorption time (absorption time 1st/2nd/3rd, seconds)

An absorbent article, which is a sample (47 cm * 19 cm) comprising an absorbent layer comprising 13 g of a superabsorbent polymer, was placed in a symmetric U-shaped frame having a 70° slope (the bottom of the U-shaped frame is a concave shape of an arc having a central angle of 90° with a radius of 5 cm, and the sides extending to both sides from the part where the arc ends have a 70° slope).

Next, 50 ml of a 0.9% by weight sodium chloride (NaCl) aqueous solution at 35±1 °C was injected into the sample and the time for all the salt water to be absorbed was measured. The time for all the salt water to be absorbed was visually evaluated as the time point at which the salt water disappears from the uppermost layer of the absorbent article. Subsequently, the cumulative absorption time was measured by repeating 3 times at 20-minute intervals from the point of starting to inject the salt water, and the results are shown in Table 3 below.

**[Table 3]**

| Category (resin type) | Absorbent article physical properties | | |
|---|---|---|---|
| | Absorption durability(count) | Absorbent time 1st/2nd/3rd(sec) | Absorbent time Total(sec) |
| Example 1 | 2386 | 27/20/36 | 83 |
| Example 2 | 2015 | 25/18/33 | 76 |
| Example 3 | 2102 | 24/17/31 | 72 |
| Example 4 | 2157 | 24/18/33 | 75 |
| Example 5 | 2276 | 27/17/37 | 81 |
| Example 6 | 2135 | 24/16/30 | 70 |
| Example 7 | 2498 | 28/21/35 | 81 |
| Comparative Example 1 | 23 | 37/31/58 | 126 |
| Comparative Example 2 | 10 | 35/29/52 | 116 |
| Comparative Example 3 | 36 | 37/32/61 | 130 |
| Comparative Example 4 | 8 | 31/27/49 | 107 |
| Comparative Example 5 | 892 | 45/37/66 | 148 |
| Comparative Example 6 | 347 | 36/32/55 | 123 |
| Comparative Example 7 | 512 | 47/41/73 | 161 |
| Comparative Example 8 | 489 | 45/41/70 | 155 |

As shown in Table 3, the absorbent article using the superabsorbent polymer satisfying the four physical properties of the present invention exhibits excellent cumulative absorption rate under actual use conditions. In particular, due to appropriate hydrophobicity, the surface tension of the resin is increased, thereby enabling excellent absorption durability under practical use conditions.

## Claims

1. A polyacrylate-based superabsorbent polymer satisfying the following i) to iv):
i) surface tension measured according to a Wilhelmy plate method at a room temperature of 24±2°C is 63 to 72 mN/m,
ii) vortex absorption rate is 30 seconds or less,
iii) centrifuge retention capacity (CRC) measured in accordance with EDANA WSP 241.3 is 32 g/g or more,
iv) 0.9 psi absorbency under pressure (AUP) measured in accordance with EDANA WSP 242.3 is 12 g/g or more.

2. The superabsorbent polymer according to Claim 1,
wherein the polyacrylate-based superabsorbent polymer comprises:
a base resin comprising a hydrogel polymer obtained by polymerizing a monomer mixture comprising an acrylic acid-based monomer having at least partially neutralized acidic groups, an internal crosslinking agent, a surfactant having an HLB of 1 to 10 and a weight-average molecular weight of 200 to 1,500 g/mol, and an encapsulated foaming agent; and a surface crosslinking layer formed on the surface of the base resin powder.

3. The superabsorbent polymer according to Claim 1,
wherein the surfactant comprises at least one selected from the group consisting of calcium stearate, glyceryl monolaurate, polyoxyethylene (10) lauryl ether, sucrose dioleate, propylene glycol monostearate, and ethylene glycol distearate.

4. The superabsorbent polymer according to Claim 1,
wherein the surfactant is included in an amount of 10 to 10,000 ppmw based on the total amount of the acrylic acid-based monomer.

5. The superabsorbent polymer according to claim 1,
wherein the encapsulated foaming agent has a structure comprising:
a core containing a hydrocarbon; and a shell surrounding the core and formed of a thermoplastic resin.

6. The superabsorbent polymer according to Claim 5,
wherein the hydrocarbon comprises at least one selected from the group consisting of n-propane, n-butane, iso-butane, cyclobutane, n-pentane, iso-pentane, cyclopentane, n-hexane, iso-hexane, cyclohexane, n-heptane, iso-heptane, cycloheptane, n-octane, iso-octane, and cyclooctane, and
the thermoplastic resin comprises a polymer formed from at least one monomer selected from the group consisting of (meth)acrylate, (meth)acrylonitrile, aromatic vinyl, vinyl acetate, vinyl halide, and vinylidene halide.

7. The superabsorbent polymer according to Claim 1,
wherein the encapsulated foaming agent is included in an amount of 10 to 10,000 ppmw based on the total content of the acrylic acid-based monomer.

8. The superabsorbent polymer according to Claim 1,
wherein the surfactant and the encapsulated foaming agent are included in a weight ratio of 1:1 to 1:50.

9. The superabsorbent polymer according to Claim 1,
wherein the internal crosslinking agent comprises at least one selected from the group consisting of N,N'-methylenebisacrylamide, allyl (meth)acrylate, trimethylolpropane tri(meth)acrylate, ethylene glycol di(meth)acrylate, polyethylene glycol (meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, polyethylene glycol diglycidyl ether, propylene glycol, glycerin, and ethylene carbonate.

10. The superabsorbent polymer according to Claim 1,
wherein the internal crosslinking agent is incluede in an amount of 100 to 10,000 ppmw based on the total content of the acrylic acid-based monomer.

11. A preparation method of a superabsorbent polymer comprising the steps of:
forming a hydrogel polymer by polymerizing a monomer mixture comprising an acrylic acid-based monomer having at least partially neutralized acidic groups, an internal crosslinking agent, a surfactant having an HLB of 1 to 10 and a weight-average molecular weight of 200 to 1,500 g/mol, and an encapsulated foaming agent;
forming a base resin powder by drying, pulverizing, and classifying the hydrogel polymer; and
preparing a polyacrylate-based superabsorbent polymer having a surface crosslinking layer formed on a surface of the base resin powder by heat-treating the base resin powder in the presence of a surface crosslinking agent.

12. An absorbent article comprising;
a liquid-impermeable backsheet, an absorbent layer, and a liquid-permeable topsheet sequentially laminated,
wherein the absorbent layer comprises the superabsorbent polymer according to Claim 1.
